# EUROPEAN PATENT APPLICATION

(11) **EP 2 921 068 A1**
(43) Date of publication of application: **23.09.2015**
(21) Application number: 14460073.1
(22) Date of filing: 20.10.2014
(51) Int. Cl.: A43B 13/04, A43B 17/14, C08J 9/00, C08G 18/06

(54) **Microporous polyurethane elastomer-based nanocomposite and a method of its manufacturing**

(30) Priority: 19.03.2014 PL 40758614
(71) Applicant: Politechnika Gdanska, 80-233 Gdansk (PL)
(72) Inventor: Piszczyk, Lukasz, 80-107 Gdansk (PL); Haponiuk, Józef, 80-344 Gdansk (PL); Strankowski, Michal, 80-177 Gdansk (PL); Danowska, Magdalena, 80-266 Gdansk (PL); Bedlin, Anna, 87-600 Lipno (PL)

(57) **Abstract**

The object of the invention is microporous polyurethane elastomer-based nanocomposite that contains 0.01-30 parts by weight of nanofiller and which is the product of the reaction between the polyol premix containing 1-90 parts by weight of polyetherols and/or polyestrols with a molecular weight from 150 to 150 000 g/mol, a hydroxyl number between 10 and 700 mg KOH/g, and the functionality of 1.5-6; 0.01-15 parts by weight of surfactant; 0.01-15 parts of amine and organometallic catalysts; 0.01-20 parts of environment-friendly porophore; and isocyanate agent containing 1-90 parts by weight of prepolymer with 1-32% of free isocyanate groups that had originated from oligoetherols and/or oligoestrols with a molecular weight from 400 to 15000 g/mol, a hydroxyl number between 10 and 700 mg KOH/g, and the functionality of 1-4; and diisocyanates with the NCO/OH ratio from 0.5 to 4 per 1 mol of -OH groups. Preferably the homogenized dispersion of graphene oxide or reduced graphene oxide in polar or non-polar solvents, more preferably in water, tetrahydrofuran, dimethylformamide and acetone; or the dispersion of graphene oxide or reduced graphene oxide in the oligomeric component or in the mixture of components based on polyol premix, or in isocyanate agent is used as a nanofiller. Isocyanate agent is added in the amount corresponding to the value of IC index between 0.5 and 4.

The method of manufacturing the said microporous polyurethane elastomer-based nanocomposite is also the object of invention.

## Description

The object of the invention is microporous polyurethane elastomer-based nanocomposite that contains graphene oxide or reduced graphene oxide. The method of obtaining the said nanocomposite is also the object of invention as it can be applied in footwear production as well as shock absorbers and elastic, anti-vibration and noise reduction elements.

The structure of microporous polyurethane elastomers is characterized by small, closed cells with the density ranging from 0.25 to 0.90 kg/m³. These materials combine the features of both elastomers and polyurethane foams. Microporous elastomers are mainly used in footwear industry as the structural components of shoes. A shoe sole, particularly in sport footwear, is generally made of microcell EVA foams (ethylene- vinyl acetate copolimer). The processing of these foams is not easy, while the foams themselves do not have optimal properties. However, the foams are still used because they are available in the very low density range from 0.1 g/cm³ to 0.35 g/cm³.

In general, polyurethane materials display better physical properties than EVA polymers. Microporous polyurethanes are characterized by good mechanical and noise reduction properties. They can be successfully applied in the production of footwear, shock absorbers, elastic and anti-vibration elements, and noise reduction products. Table 1 lists the parameters of microporous elastomers used in the production of footwear as proposed by the Japanese company DIC.

**Table 1. Properties of microporous polyurethane elastomers**

| Property | Women's shoes, ether-based PU | Men's shoes, ether-based PU | Inserts, ether-based PU |
|---|---|---|---|
| Density [g/cm³] | 0.45 - 0.50 | 0.50 - 0.55 | 0.30 - 0.35 |
| Tensile strength [MPa] | 5.8 - 6.3 | 3.5 - 4.0 | 1.0 - 1.2 |
| Elongation [%] | 450 - 500 | 450 - 500 | 200 - 220 |
| Tear strength [kN/m] | 23 - 25 | 18 - 20 | 4 - 5 |

| | | | |
|---|---|---|---|
| Source: http://www.dic-global.com | | | |

Graphene is a flat two-dimensional layer of sp² hybridized carbon with a bond length of 0.142 nm. Its crystallographic lattice has a shape of honeycomb. Graphene is obtained as a result of chemical deposition from gas phase (CVD), thermal decomposition of SiC on silicon substrate, thermal decomposition of graphite oxide with hydrogen reduction, and exfoliation.

Graphene is characterized by very good thermal conductivity (4840-5300 W/mK), slight resistance, almost complete transparency (it only absorbs 2.3% of light), high electrical conductance of 9.6x10⁵ S/cm, and the fast rate of electron mobility at room temperature, i.e. 250,000 cm²/Vs. Graphene is over 100 times stronger than steel of the same thickness, and displays good elasticity, i.e. it retains its structural continuity at 20% deformation. A membrane made from graphene is gas-tight, however, at the same time it is permeable to water. This allows the application of graphene membranes in filtration at room temperature.

Graphene oxide (GO) has a layered structure with numerous oxygen groups. Hydroxyl and epoxy functional groups are present on both sides of the graphene sheet, while carboxyl and carbonyl groups mainly occur on the edges. [Hyung-il Lee, Han Mo Jeong, Functionalized graphene sheet/polyurethane nanocomposites, Physics and applications of graphene - experiments, 2011, 193 - 207].

The raw materials used in the production of graphene are graphite powder, flake graphite, mesophase carbon beads, carbon fibers, and highly oriented pyrolitic carbon. The most common method of obtaining graphene is Hummers method, which is based on the oxidation of graphite via dissolution of the salt of phosphoric(V) acid in sulphuric(VI) acid in the presence of manganese peroxide [D. C. Marcano, D. V. Kosynkin, J. M. Berlin, A. Sinitskii, Z. Sun, A. Slesarev, L. B. Alemany, W. Lu, J. M. Tour, Improved Synthesis of Graphene Oxide, ACS Nano, 4 (2010) 4806].

The reduction of graphene can be conducted by the following methods: chemical method via choosing an organic or inorganic solution; electrochemical method via choosing an electrolyte and electrochemical potential; thermal method via choosing the temperature and atmosphere; by using UV; by choosing wavelength and time; and via microwave action. The reduced graphene oxide (rGO) is a black powder which is insoluble in water.

The term polymer nanocomposite means a two-phase material in which the nanofiller particles are evenly distributed in the polymeric matrix, and at least one dimension of these particles does not exceed 100 nanometers.

Nanocomposites are considered to be the materials for the 21^{st} century; it is predicted that their application will be dynamically increasing in the coming years. Depending on the number of nanofiller dimensions that exceed 100 nanometers, three types of nanocomposites have been distinguished, as follows:
- all three dimensions of the nanofiller particle equal less than 100 nanometres (e.g. silicon dioxide)
- only two dimensions of the nanofiller particle equal less than 100 nanometres (e.g. nanotubes)
- nanocomposites in which only one dimension does not exceed 100 nanometres (e.g. phyllosilicate nanofillers).

There are three main methods for generating polymeric nanocomposites:
- *in situ* polymerization
- solution mixing method
- thermoplastic melt mixing, most frequently by using an extruder.

Dongyu C. et al. [Dongyu Cai, Jie Jin, Kamal Yusoh, Rehman Rafiq, Mo Song, High performance polyurethane/functionalized graphene nanocomposites with improved mechanical and thermal properties, Composites Science and Technology 72 (2012) 702-707] described the effect of graphene oxide (GO) on polyurethanes. For a relatively low level of filler in modified nanocomposites (1-4 wt.%), a visible increase in Young modulus, hardness and tensile strength was observed in comparison to their non-modified counterparts. The apparent increase in thermal stability by ca. 50 °C was also noted in the nanocomposite containing 4 wt% of GO.

On the other hand, Kim H. et al. [Kim H., et al., Chemistry of materials 2010, 22, p. 3441-3450] investigated the influence of graphene oxide and its reduced form on thermoplastic properties of polyurethanes. The authors observed that depending of the used method of fabrication, the materials with low percolation threshold and therefore characterized by good electrical conductance (for 0.5 wt% of TRG) as well as materials displaying good barrier capacity (for 3 wt% of GO) can be obtained.

The object of the invention are microporous polyurethane elastomer-based nanocomposites, that are modified with graphene oxide or reduced graphene oxide, characterized by unique performance properties. The method of obtaining the said microporous polyurethane elastomer-based nanocomposites is also the object of invention.

Microporous polyurethane elastomer-based nanocomposites being the product of the reaction between the polyol premix containing 1-90 parts by weight of polyetherols and/or polyestrols with a molecular weight from 150 to 150 000 g/mol, a hydroxyl number between 10 and 700 mg KOH/g, and the functionality of 1.5-6; 0.01-15 parts by weight of surfactant; 0.01-15 parts of amine and organometallic catalysts; 0.01-20 parts of environment-friendly porophore; and isocyanate agent containing 1-90 parts by weight of prepolymer with 1-32% of free isocyanate groups that had originated from oligoetherols and/or oligoestrols with a molecular weight from 400 to 15000 g/mol, a hydroxyl number between 10 and 700 mg KOH/g, and the functionality of 1-4; and diisocyanates with the NCO/OH ratio from 0.5 to 4 per 1 mol of -OH groups, is characterized according to the invention in that the said nanocomposite contains 0.01-30 parts by weight of nanofiller.

Preferably the homogenized dispersion of graphene oxide or reduced graphene oxide in polar or non-polar solvents, more preferably in water, tetrahydrofuran, dimethylformamide and acetone, should be used as a nanofiller. The isocyanate agent is added in the amount corresponding to the value of IC index between 0.5 and 4.

Preferably the dispersion of graphene oxide or reduced graphene oxide in the oligomeric component or in the mixture of components based on polyol premix, or in isocyanate agent should be used as a nanofiller. The isocyanate agent is added in the amount corresponding to the value of IC index between 0.5 and 4.

The method of manufacturing polyurethane elastomer nanocomposite that is based on the reaction between the polyol premix containing 1-90 parts by weight of polyetherols and/or polyestrols with a molecular weight from 150 to 150 000 g/mol, a hydroxyl number between 10 and 700 mg KOH/g, and the functionality of 1.5-6; 0.01-15 parts by weight of surfactant; 0.01-15 parts of amine and organometallic catalysts; 0.01-20 parts of environment-friendly porophore; and isocyanate agent containing 1-90 parts by weight of prepolymer with 1-32% of free isocyanate groups that had originated from oligoetherols and/or oligoestrols with a molecular weight from 400 to 15000 g/mol, a hydroxyl number between 10 and 700 mg KOH/g, and the functionality of 1-4; and diisocyanates with the NCO/OH ratio from 0.5 to 4 per 1 mol of -OH groups, is characterized according to the invention in that 0.01-30 parts by weight of nanofiller are added to the polyol premix and/or isocyanate agent.

Preferably the homogenized dispersion of graphene oxide or reduced graphene oxide in polar or non-polar solvents, more preferably in water, tetrahydrofuran, dimethylformamide and acetone, should be used as a nanofiller. The isocyanate agent is added in the amount corresponding to the value of IC index between 0.5 and 4.

Preferably the dispersion of graphene oxide or reduced graphene oxide in the oligomeric component or in the mixture of components based on polyol premix, or in isocyanate agent should be used as a nanofiller. The isocyanate agent is added in the amount corresponding to the value of IC index between 0.5 and 4.

In order to obtain microporous polyurethane elastomer-based nanocomposites, prepolymer containing 1-32 % of free isocyanate groups NCO and originating from the reaction of oligoetherols or oligoestrols with molecular weight from 400 to 15000 g/mol, a hydroxyl number between 10 and 700 mg KOH/g, and the functionality of 1-4, or their mixture; with diisocyanates (with the NCO/OH ratio between 0.5 and 32 per 1 mol of -OH groups) is used as isocyanate agent.

The advantage of microporous polyurethane elastomers according to the invention is the possibility of obtaining materials with the desired performance properties such as, among others, good mechanical properties, improved thermal stability, and resistance to ageing. Another advantageous feature is the possibility of using water in the foaming process of polyurethane composition whose reaction with isocyanate agent results in cross-linking of elastomer and the production of carbon dioxide or hydrophobic porophores, pentane and its derivatives as well as the mixture of the aforementioned foaming agents. The main advantage of novel microporous polyurethane elastomer-based nanocomposites with unique properties is the application of graphene oxide or reduced graphene oxide in the range from 0.01 to 30 parts by weight. In comparison to the reference materials, the use of nanofillers significantly improves the performance of the obtained materials as demonstrated by an increase in tensile strength by 40% and higher thermal stability (a 12°C increase in T₅, the temperature corresponding to a 5% loss of mass).

The invention is described further in the examples of its implementation.

### Example 1

The dispersion of graphene oxide in water is added to 68 parts by weight of polyol, and the mixture is dispersed with a high speed stirrer for 30 min in an ultrasound bath. Next, the mixture is placed under a vacuum to remove water from the system. Then 7 parts by weight of chain extender in the form of 1,4-butanediol, 0.6 parts of Dabco 33 LV (solution of 1,4-diazabicyclo[2.2.2]octane in ethylene glycol), 0.34 parts of surfactant, and 0.34 parts by weight of foaming agent, namely, water are added. The mixture is agitated. Next, prepolymer is added in the amount corresponding to the NCO/OH ratio of 1:0.98, and the mixture is mixed again.

### Example 2

Microporous polyurethane elastomer-based nanocomposite is prepared as follows: 0.35 parts by weight of nanofiller in the form of reduced graphene oxide are added to 69.5 parts by weight of polyol α,ω-Dihydroxyoligo(butylene-ethylene adipate) (L_{OH}=58 mgKOH/g) and 7 parts by weight of chain extender 1,4-butanediol. The mixture is mixed with a high speed stirrer at 10 000 rpm for 30 min in an ultrasound bath in order to disperse the nanofiller. Next, 0.56 parts by weight of catalyst Dabco 33 LV (solution of 1,4-diazabicyclo[2.2.2]octane in ethylene glycol), 0.34 parts of surfactant, and 0.34 parts by weight of foaming agent, namely, water are added. The mixture is agitated. Next, 69 parts by weight of prepolymer is added, and the mixture is mixed again.

### Example 3

The dispersion of graphene oxide in chloroform is added to 68 parts by weight of polyol, and the mixture is dispersed with a high speed stirrer for 30 min in an ultrasound bath. Next, the mixture is placed in an incubator at 70 °C to remove solvent from the system. Then 7 parts by weight of chain extender in the form of 1,4-butanediol, 0.6 parts of Dabco 33 LV (solution of 1,4-diazabicyclo[2.2.2]octane in ethylene glycol), 0.34 parts of surfactant, and 0.34 parts by weight of foaming agent, namely, water are added. The mixture is agitated. Next, prepolymer is added in the amount corresponding to the NCO/OH ratio of 1:1, and the mixture is mixed again.

## Claims

1. Microporous polyurethane elastomer-based nanocomposites, being the product of the reaction between the polyol premix containing 1-90 parts by weight of polyetherols and/or polyestrols with a molecular weight from 150 to 150 000 g/mol, a hydroxyl number between 10 and 700 mg KOH/g, and the functionality of 1.5-6; 0.01-15 parts by weight of surfactant; 0.01-15 parts of amine and organometallic catalysts; 0.01-20 parts of environment-friendly porophore; and isocyanate agent containing 1-90 parts by weight of prepolymer with 1-32% of free isocyanate groups that had originated from oligoetherols and/or oligoestrols with a molecular weight from 400 to 15000 g/mol, a hydroxyl number between 10 and 700 mg KOH/g, and the functionality of 1-4; and diisocyanates with the NCO/OH ratio from 0.5 to 4 per 1 mol of -OH groups, is **characterized in that** the said nanocomposite contains 0.01-30 parts by weight of nanofiller.

2. Elastomer according to claim 1 is **characterized in that** the homogenized dispersion of graphene oxide or reduced graphene oxide in polar or non-polar solvents, preferably in water, tetrahydrofuran, dimethylformamide and acetone, is used as a nanofiller, while isocyanate agent is added in the amount corresponding to the value of IC index between 0.5 and 4.

3. Elastomer according to claim 1 is **characterized in that** the dispersion of graphene oxide or reduced graphene oxide in the oligomeric component or in the mixture of components based on polyol premix, or in isocyanate agent is used as a nanofiller, while isocyanate agent is added in the amount corresponding to the value of IC index between 0.5 and 4.

4. The method of obtaining polyurethane elastomer nanocomposite that is based on the reaction between the polyol premix containing 1-90 parts by weight of polyetherols and/or polyestrols with a molecular weight from 150 to 150 000 g/mol, a hydroxyl number between 10 and 700 mg KOH/g, and the functionality of 1.5-6; 0.01-15 parts by weight of surfactant; 0.01-15 parts of amine and organometallic catalysts; 0.01-20 parts of environment-friendly porophore; and isocyanate agent containing 1-90 parts by weight of prepolymer with 1-32% of free isocyanate groups that had originated from oligoetherols and/or oligoestrols with a molecular weight from 400 to 15000 g/mol, a hydroxyl number between 10 and 700 mg KOH/g, and the functionality of 1-4; and diisocyanates with the NCO/OH ratio from 0.5 to 4 per 1 mol of -OH groups, is **characterized in that** 0.01-30 parts by weight of nanofiller are added to the polyol premix and/or isocyanate agent.

5. The method according to claim 1 is **characterized in that** the homogenized dispersion of graphene oxide or reduced graphene oxide in polar or non-polar solvents, preferably in water, tetrahydrofuran, dimethylformamide and acetone, is used as a nanofiller, while isocyanate agent is added in the amount corresponding to the value of IC index between 0.5 and 4.

6. The method according to claim 1 is **characterized in that** the dispersion of graphene oxide or reduced graphene oxide in the oligomeric component or in the mixture of components based on polyol premix, or in isocyanate agent is used as a nanofiller, while isocyanate agent is added in the amount corresponding to the value of IC index between 0.5 and 4.
